# EUROPÄISCHE PATENTSCHRIFT

(11) **EP 3 586 049 B1**
(45) Veröffentlichungstag und Bekanntmachung des Hinweises auf die Patenterteilung: **17.04.2024**
(21) Anmeldenummer: 18703322.0
(22) Anmeldetag: 07.02.2018
(51) Int. Cl.: A62C 2/06, F16L 5/04, H02G 3/22, H02G 3/04

(54) **BRANDSCHUTZELEMENT**
FIRE RETARDANT ELEMENT
ÉLEMENT IGNIFUGE

(30) Priorität: 22.02.2017 EP 17157380
(43) Veröffentlichungstag der Anmeldung: 01.01.2020
(73) Patentinhaber: Hilti Aktiengesellschaft, 9494 Schaan (LI)
(72) Erfinder: MÜNZENBERGER, Herbert, 65191 Wiesbaden (DE); OBER, Andreas, 86916 Kaufering (DE)
(74) Vertreter: Hilti Aktiengesellschaft Corporate Intellectual Property
(86) Internationale Anmeldenummer: PCT/EP2018/052988
(87) Internationale Veröffentlichungsnummer: WO 2018/153659

(56) Entgegenhaltungen:
- EP-A1- 2 607 761
- EP-A1- 3 246 613
- EP-A1- 3 260 173
- WO-A1-2011/151937
- GB-A- 1 500 912

## Beschreibung

Die Erfindung betrifft ein Brandschutzelement zum Abschotten von durch Wände oder Decken hindurchführende Öffnungen, insbesondere von Leitungsdurchgängen, mit einem Kern aus einem Füllmaterial und einem Rahmen.

Brandschutzelemente, die Leitungsdurchgänge mit nicht feuerfesten Rohren oder Kabeln in Decken oder Wänden im Brandfall schließen können, um eine Ausbreitung von Feuer und Rauch in Gebäuden zu verhindern, sind in verschiedensten Ausgestaltungen bekannt. Die Brandschutzelemente enthalten üblicherweise ein intumeszierendes Material, das um die Leitungen herum angeordnet wird, und ein Verstärkungselement, das das intumeszierende Material stabilisiert und im Brandfall den Verlust der schützenden Aschekruste verhindert bzw. verzögert.

Die EP 2607761 A1 beispielsweise offenbart eine an einer Wand oder Decke montierbare Brandschutzmanschette zum Abschotten von durch Wände oder Decken hindurchführenden Leitungen mit einer intumeszierenden Brandschutz-Einlage, die als ein den vom Gehäuse umspannten Raum vollständig ausfüllender, nachgiebig verformbarer Formkörper ausgebildet ist, und mit einem die Brandschutz-Einlage umgebenden Wandungsteil, an dessen Innenseite die Brandschutz-Einlage angeordnet ist.

Ferner offenbart die GB 1500912 A1 eine Brandschutzvorrichtung mit einem Gitter aus zellulärem Konstruktionswerkstoff, der mit intumeszierendem Material beschichtet ist, und einem den Konstruktionswerkstoff umgebenden Metallrahmen, der auch mit einem intumeszierenden Material ausgekleidet sein kann.

Nachteilig bei den bekannten Brandschutzelementen ist, dass diese entweder einen komplexen Aufbau besitzen und damit teuer in der Herstellung sind oder einfach aufgebaut sind, dafür aber nur mäßige Brandschutzeigenschaften aufweisen. Ferner ist die korrekte Montage der Brandschutzelemente häufig schwierig und führt leicht zu Fehlern, die die Brandschutzeigenschaften des Brandschutzelements reduzieren.

Aufgabe der Erfindung ist es, ein Brandschutzelement bereitzustellen, das kostengünstig herstellbar und einfach zu montieren ist, sodass Anwendungsfehler weitgehend ausgeschlossen sind.

Zur Lösung der Aufgabe ist ein Brandschutzelement zum Abschotten von durch Wände oder Decken hindurchführende Öffnungen, insbesondere von Leitungsdurchgängen, mit einem Kern aus einem Füllmaterial und einem Rahmen vorgesehen, wobei der Rahmen den Kern zumindest abschnittsweise in einer Umfangsrichtung umgibt und fest mit dem Kern verbunden ist. Der Rahmen ist aus einem intumeszierendem Material gebildet und weist ein Verstärkungselement auf. Da der Rahmen das intumeszierende Material umfasst, das im Brandfall für das Verschließen der Öffnung vorgesehen ist, steht der Kern aus Füllmaterial vollständig für die Durchführung von Leitungen zur Verfügung, d.h. bei der Montage können an jeder Stelle und im Wesentlichen über die gesamte Breite und Höhe des Kerns Leitungen durch das Brandschutzelement geführt werden, ohne die Brandschutzeigenschaften des Brandschutzelements wesentlich zu beeinträchtigen. Auf diese Weise ist eine einfache und sichere Montage des Brandschutzelements gewährleistet. Das Füllmaterial füllt den Rahmen im Wesentlichen vollständig aus und stellt hierdurch die Rauch- und Schalldichtigkeit des Brandschutzelements sicher. Der Rahmen sorgt im Brandfall für eine gerichtete Expansion des intumeszierenden Materials und stabilisiert die Intumeszenz-Kruste. Der einfache Aufbau des Brandschutzelements ermöglicht ferner eine kostengünstige Herstellung.

Der Rahmen ist vorzugsweise einstückig. Dies bietet den Vorteil, dass es nur wenige Übergangsbereiche zwischen verschiedenen Abschnitten des Rahmens gibt, in denen intumeszierendes Material und/oder Füllmaterial im Brandfall austreten kann. Ferner stabilisieren sich verschiedene Abschnitte des Rahmens bei der Expansion des intumeszierenden Materials gegenseitig, sodass durch diese Gestaltung die strukturelle Integrität des Brandschutzelements verbessert ist.

Das Füllmaterial kann im Wesentlichen keine Brandschutzadditive aufweisen. Da der Rahmen aus intumeszierendem Material die Brandschutzeigenschaften des Brandschutzelements bereitstellt, kann ein Füllmaterial mit geringen oder keinen Brandschutzadditiven vorgesehen sein. Hierdurch ist das Brandschutzelement besonders kostengünstig herstellbar.

Erfindungsgemäß ist das Füllmaterial ein Weichschaum. Weichschäume haben den Vorteil, dass diese von einem Monteur zur Durchführung von Leitungen beispielsweise mit einer Lanze leicht durchstoßen werden können, wodurch die Montage beschleunigt wird.

Gemäß einer bevorzugten Ausführungsform ist der Weichschaum elastisch, wodurch dieser durch das Brandschutzelement geführte Leitungen dicht umschließt und somit eine besonders gute Rauch- und/oder Schalldichtigkeit gewährleistet.

In einer alternativen Ausführungsform kann das Füllmaterial ein Hartschaum sein, um das Brandschutzelement stabiler zu gestalten.

Das intumeszierende Material ist vorzugsweise ein Hartschaum, insbesondere mit einer Dichte von 100 kg/m³ bis 600 kg/m³, bevorzugt mit einer Dichte von 200 kg/m³ bis 500 kg/m³.

Es ist von Vorteil, wenn der Rahmen ein Intumeszenzvolumen aufweist, das dafür vorgesehen ist, im Brandfall den durch den Rahmen gebildeten Querschnitt zu verschließen. Auf diese Weise ist sichergestellt, dass das intumeszierende Material ausreicht, um die abzuschottende Öffnung im Brandfall sicher zu verschließen und einen effektiven Brandschutz zu gewährleisten.

Erfindungsgemäß ist das Verstärkungselement in Umfangsrichtung in der äußeren Oberfläche des Rahmens angeordnet. Das Verstärkungselement kann hierbei auch auf der äußeren Oberfläche des Rahmens angeordnet sein bzw. diese bilden. Auf diese Weise begrenzt der Rahmen die Ausbreitung des intumeszierenden Materials im Brandfall und ermöglicht so, die Expansion des intumeszierenden Materials nach innen zu lenken. Da sich somit das intumeszierende Material nicht mehr unkontrolliert in alle Richtungen ausbreitet, kann die Menge an intumeszierendem Material im Brandschutzelement reduziert werden, wodurch sich geringere Herstellungskosten ergeben.

Bevorzugt ist das Verstärkungselement durch eine Platte, eine Matte, ein Gitter oder ein Gewebe gebildet und besteht vorzugsweise aus Metall, Streckmetall, Glasfasern, Basaltfasern, Kohlenstofffasern oder Keramikfasern. Auch ein hybrider Aufbau des Verstärkungselements aus mehreren Materialien ist möglich. Diese Materialien weisen im Vergleich zum intumeszierendem Material des Rahmens eine höhere Temperaturbeständigkeit auf. Diese ist vorteilhaft, da das Verstärkungselement von der das intumeszierende Material aktivierenden Temperatur nicht beeinträchtigt wird und auf diese Weise seine stabilisierende Funktion auch im Brandfall ausüben kann. Die Verwendung einer Matte, eines Gitters oder eines Gewebes bietet eine gute Verbindung des Verstärkungselements mit dem intumeszierenden Material. Ferner behält ein Verstärkungselement mit einer solchen Struktur seine stabilisierenden Eigenschaften auch bei vereinzelten strukturellen Schäden bei.

Gemäß einer weiteren bevorzugten Ausführungsform sind zwei entgegengesetzte Seiten des Kerns im Wesentlichen nicht von dem Rahmen bedeckt. Das Brandschutzelement kann daher so in einer Öffnung angeordnet werden, dass die beiden freiliegenden Seiten des Kerns aus Füllmaterial im Wesentlichen parallel zu Wand bzw. der Decke ausgerichtet sind und die Seiten die von dem Rahmen bedeckt sind, in Richtung der Wand bzw. der Decke zeigen. Auf diese Weise können Leitungen durch das Brandschutzelement durchgeführt werden, ohne dass hierzu der Rahmen des Brandschutzelements durchstoßen werden muss. Dies vereinfacht die Montage und verhindert eine Beschädigung des Rahmens.

Der Rahmen kann eine Stoßkante aufweisen, die durch ein erstes und ein gegenüberliegendes zweites Ende des Rahmens gebildet ist. An dieser Stoßkante ist der Rahmen durchtrennt und kann daher mit geringem Kraftaufwand beispielsweise mit einem Messer oder Schraubendreher geöffnet werden. Auf diese Weise ist ein weiterer Zugang zum Kern aus Füllmaterial bereitgestellt, der zusätzlich zu den freiliegenden Seiten des Kerns zur Installation von Leitungen genutzt werden kann. Ferner wird hierdurch das Entfernen des Brandschutzelements erleichtert, beispielsweise wenn das Brandschutzelement nach einem Brand ausgetauscht werden muss.

Das Brandschutzelement ist vorzugsweise im Wesentlichen quaderförmig und weist insbesondere einen im Wesentlichen quaderförmigen Kern auf. Diese Gestaltung hat den Vorteil, dass das Brandschutzelement im Verbund mit weiteren Brandschutzelementen verwendet werden kann, um ein Brandschott für Öffnungen zu bilden, deren Querschnitt größer ist als eine Seite des Brandschutzelements. Ein auf diese Weise modular aufgebautes Brandschott kann beispielsweise wie eine Mauer gestaltet sein, bei der die Brandschutzelemente die Mauersteine bilden. Ferner ist ein quaderförmiges Brandschutzelement kostengünstig herstellbar und kann raumeffizient gelagert sowie transportiert werden.

Weitere Vorteile und Merkmale ergeben sich aus der nachfolgenden Beschreibung in Verbindung mit den beigefügten Zeichnungen. In diesen zeigen:
- Figur 1 in einer perspektivischen Darstellung ein erfindungsgemäßes Brandschutzelement mit einem Rahmen,
- Figur 2a in einer Seitenansicht den Rahmen des Brandschutzelements aus Figur 1 in abgewickelter Form,
- Figur 2b in einer Draufsicht den Rahmen aus Figur 2a, und
- Figur 3 in einer perspektivischen Darstellung das Brandschutzelement aus Figur 1, das in einer Öffnung eingebaut ist.

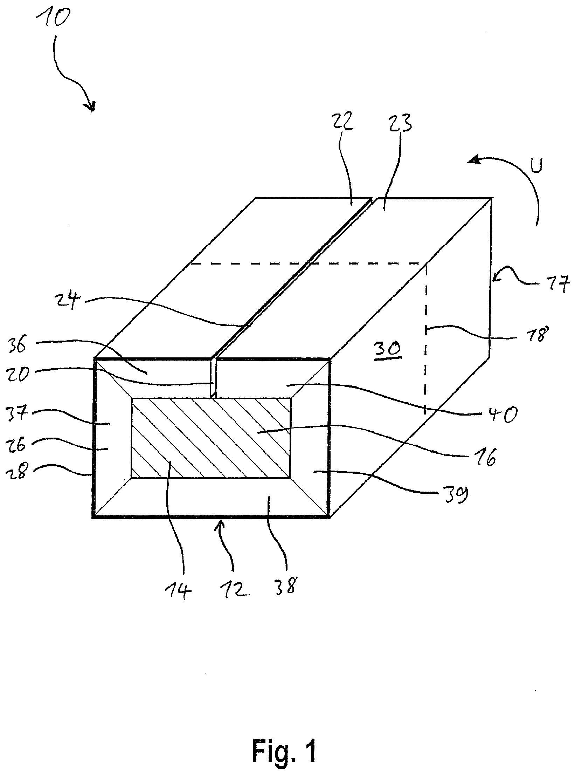

In Figur 1 ist ein erfindungsgemäßes Brandschutzelements 10 zum Abschotten von durch Wände oder Decken hindurchführende Öffnungen, wie Leitungsdurchgänge, mit einem Rahmen 12 und einem Kern 14 aus einem Füllmaterial gezeigt.

Der Kern 14 ist quaderförmig und wird von dem Rahmen 12 in Umfangsrichtung U umschlossen, wobei die beiden Stirnseiten 16, 17 des Kerns 14 frei bleiben. Der Rahmen 12 erstreckt sich dabei von einer Stirnseite 16 bis zur entgegengesetzt angeordneten anderen Stirnseite 17. Hierdurch hat das Brandschutzelement 10 im Wesentlichen die Gestalt eines quaderförmigen Blocks.

Der Rahmen 12 bedeckt den Außenumfang 18 des Brandschutzelements 10 bis auf einen schmalen Schlitz 20 vollständig. Der Schlitz 20 wird hierbei von zwei entgegengesetzt angeordneten Enden 22, 23 des Rahmens 12 gebildet, die sich auf einer Seite des Brandschutzelements 10 gegenüberliegen und eine Stoßkante 24 bilden.

In einer alternativen Ausführungsform kann der Rahmen 12 in Umfangsrichtung U geschlossen sein und keinen Schlitz 20 aufweisen.

Der Rahmen 12 ist aus einer Schicht 26 aus intumeszierendem Hartschaum gebildet und umfasst ein flächenförmiges Verstärkungselement 28, das auf der Schicht 26 aus intumeszierendem Hartschaum angebracht oder zumindest teilweise in der Schicht 26 aus intumeszierendem Hartschaum angeordnet ist. In beiden Fällen ist die Schicht 26 aus intumeszierendem Hartschaum fest mit dem Verstärkungselement 28 verbunden.

Die Schicht 26 aus intumeszierendem Hartschaum ist zwischen dem Kern 14 aus Füllmaterial und dem Verstärkungselement 28 angeordnet, das die äußere Oberfläche 30 des Rahmens 12 bzw. des Brandschutzelements 10 in Umfangsrichtung U bildet.

Der intumeszierende Hartschaum, aus dem die Schicht 26 gebildet ist, ist ein PIR- oder PUR-Schaum mit einer Intumeszenzkomponente umfassend einen Säurebildner (z.B. APP), einen Kohlenstofflieferanten bzw. Zuckerpolyol (z.B. Dipenta), einen NH₃-abspaltenden Gasbildner (z.B. aus der Gruppe Melamin, Guanidin, Melamincyanurat), Blähgraphit und gegebenenfalls Zinkborat und ATH.

Der intumeszierende Hartschaum hat eine Dichte von 200 kg/m³. Alternativ kann der intumeszierende Hartschaum eine Dichte aufweisen, die im Bereich von 100 kg/m³ bis 600 kg/m³ liegt.

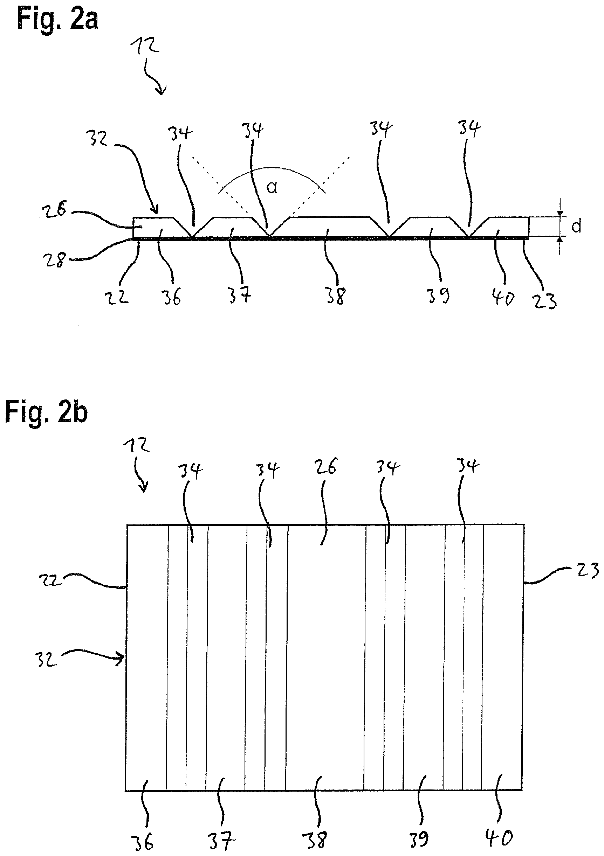

Die Schicht 26 hat eine Dicke d (siehe Figur 2a) und der intumeszierende Hartschaum ein Intumeszenzvolumen, die gewährleisten, dass die gesamte Fläche der Stirnseiten 16, 17 im Brandfall sicher verschlossen wird. Auf diese Weise ist sichergestellt, dass das Brandschutzelement 10 selbst dann eine Öffnung im Brandfall sicher verschließt, wenn der Kern 14 im Wesentlichen vollständig von Leitungen durchdrungen ist und/oder der Kern 14 fehlt.

Das Verstärkungselement 28 besteht aus einem temperaturstabilen, mechanisch beanspruchbarem Material, zum Beispiel einem Streckmetall. In einer alternativen Ausführungsform kann das Verstärkungselement 28 aus einer Platte, einer Matte, einem Gitter oder einem Gewebe gebildet sein, welche(s) vorzugsweise aus Metall, Glasfasern, Basaltfasern, Kohlenstofffasern oder Keramikfasern besteht.

Der Rahmen 12 ist einstückig. Alternativ kann der Rahmen 12 aus mehreren miteinander verbundenen Abschnitten gebildet sein.

Das Füllmaterial des Kerns 14 ist ein PUR Weichschaum, der keine Brandschutzadditive enthält und im Wesentlichen schall- und rauchdicht ist.

In einer alternativen Ausführungsform ist das Füllmaterial des Kerns 14 ein PUR Hartschaum, der keine Brandschutzadditive enthält und im Wesentlichen schall- und rauchdicht ist.

Der Kern 14 ist dicht und fest, vorzugsweise stoffschlüssig, mit dem Rahmen 12 verbunden. Hierdurch ist sichergestellt, dass das Füllmaterial nicht aus dem Rahmen 12 herausgedrückt wird, wenn eine Leitung durch das Füllmaterial geführt oder eine Durchführung für eine Leitung im Füllmaterial gebildet wird. Ferner ist auf diese Weise die Rauch- und Schalldichtigkeit des Brandschutzelements 10 sichergestellt.

Es ist von Vorteil, wenn das Füllmaterial des Kerns 14 von dem intumeszierenden Material des Rahmens 12 einfach unterscheidbar ist, beispielsweise durch eine unterschiedliche, bevorzugt kontrastierende Farbgebung. Auf diese Weise wird dem Monteur angezeigt, welcher Bereich zum Durchführen von Leitungen vorgesehen ist, wodurch Anwendungsfehler, wie das Entfernen von intumeszierendem Material aus dem Rahmen 12, vermieden werden.

Zur Herstellung des Brandschutzelements 10 wird zunächst der Rahmen 12 in Form einer Platte 32 mit Vertiefungen 34 in der Schicht 26 aus intumeszierendem Hartschaum gefertigt (siehe Figuren 2a und 2b).

Hierzu wird zuerst das Verstärkungselement 28 auf den Boden einer ersten Form gelegt. Anschließend wird die erste Form mit dem intumeszierenden Hartschaum befüllt und mit einem Deckel mit entsprechenden keilförmigen Stegen für die Vertiefungen 34 verschlossen.

Die Schicht 26 aus intumeszierendem Hartschaum weist nun vier zu den beiden Enden 22, 23 des Rahmens 12 parallel verlaufende Vertiefungen 34 auf, die die Platte 32 in fünf Segmente 36, 37, 38, 39, 40 unterteilt.

Die Vertiefungen 34 reichen bis zum Verstärkungselement 28 und teilen die Schicht 26 aus intumeszierendem Hartschaum. Alternativ können die Vertiefungen 34 flacher ausgebildet sein und die Schicht 26 aus intumeszierendem Hartschaum nicht vollständig teilen. Die Vertiefungen 34 dienen als Sollbiegestellen und müssen aus diesem Grund zumindest so tief ausgebildet sein, dass sich die Platte 32 leicht und wohl definiert an diesen Vertiefungen 34 falten lässt.

Die Vertiefungen 34 sind keilförmig und weisen einen Winkel α von 90° auf. In einer alternativen Ausführungsform können die Vertiefungen 34 auch anders geformte Querschnitte aufweisen, beispielsweise eine Keilform mit konkaven und/oder konvexen Flanken. Zusätzlich oder alternativ können auch die Winkel α von 90° abweichen, jedoch sind Winkel α zwischen 60° und 120° bevorzugt. Insbesondere können die Vertiefungen 34 in einer Platte 32 auch unterschiedlich zueinander gestaltet sein.

Um das Brandschutzelement 10 zu bilden, wird die Platte 32 in eine zweite Form eingelegt, wobei das mittlere Segment 38 mit dem Verstärkungselement 28 nach unten auf den Boden der Form gelegt und die an das mittlere Segment 38 angrenzenden Segmente 37, 39 um 90° nach oben gefaltet werden. Auf diese Weise bildet der Rahmen 12 ein U-Profil, das von oben mit dem Kern 14 aus Füllmaterial befüllt werden kann. Ferner kann vor dem Befüllen eines der äußeren Segmente 36, 40 parallel zum mittleren Segment 38 gefaltet werden.

In einem alternativen Herstellungsverfahren kann der Rahmen 12 auch zuerst geschlossen, d.h. vollständig zu einem Quader gefaltet, und anschließend über eine der Stirnseiten 16, 17 befüllt werden.

Nach dem Befüllen des Rahmens 12 mit dem Füllmaterial, wird der Rahmen 12 sowie die zweite Form geschlossen und das Brandschutzelement 10 fertiggestellt.

Der Kern 14 aus Füllmaterial kann ein Formteil sein, das den Rahmen 12 vollständig ausfüllt. Vorzugsweise weist der Kern 14 als Formteil ein kleines Übermaß auf, sodass der Kern 14 im Rahmen 12 mittels einer Presspassung gehalten wird und Lücken sicher abgedichtet werden.

Der Schlitz 20 kann durch ein geeignetes Brandschutzmittel, beispielsweise eine intumeszierende Einlage, verschlossen werden und/oder mit einem intumeszierenden Schaumaterial ausgespritzt werden.

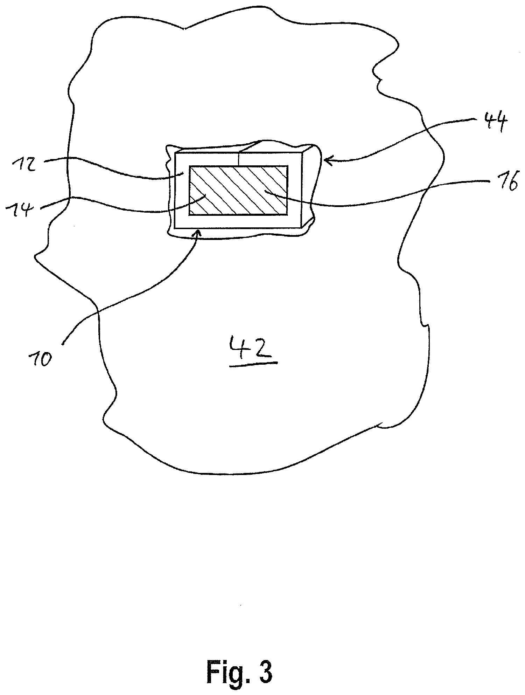

Alternativ kann der Kern 14 durch ein in den Rahmen 12 eingebrachtes Schaummaterial gebildet sein. Ist der Kern 14 als Schaummaterial vorgesehen, wird zuerst der Rahmen 32 gebildet und anschließen der Innenraum des Rahmens 32 mit dem Füllmaterial ausgespritzt. Das Ausspritzen des Innenraums des Rahmens 32 mit dem Füllmaterial kann auch erst vor Ort erfolgen, insbesondere nachdem der Rahmen 32 bereits in die abzuschottende Öffnung 44 (siehe Figur 3) eingesetzt wurde.

In einem alternativen Herstellungsverfahren kann die erste und zweite Form durch eine einzige, verstellbare Form oder entsprechende Haltelemente ersetzt sein, wodurch das Herstellungsverfahren weiter vereinfacht wird.

In Figur 3 ist ein Ausschnitt einer Wand 42 mit einer Öffnung 44 gezeigt, in der das Brandschutzelement 10 als Brandschott eingebaut ist.

Das Brandschutzelement 10 ist so angeordnet, dass die Stirnseite 16 im Wesentlichen parallel zu Wand 42 ausgerichtet ist und die Seiten, die von dem Rahmen 12 bedeckt sind, in Richtung der Wand 42 zeigen. Auf diese Weise können Leitungen durch das Brandschutzelement 10 hindurchgeführt werden, ohne dabei den Rahmen 12 zu beschädigen.

Um Leitungen durch das Brandschutzelement 10 zu führen, kann beispielsweise mittels einer Lanze eine Durchführung im Kern 14 aus Füllmaterial geschaffen werden, durch die die Leitung geschoben werden kann.

Mit dem erfindungsgemäßen Brandschutzelement 10 wird ein Brandschutzelement bereitgestellt, das einfach und kostengünstig herstellbar ist, einfach und fehlerfrei zu installieren ist sowie von Anfang an schall- und rauchdicht ist.

## Patentansprüche

1. Brandschutzelement (10) zum Abschotten von durch Wände oder Decken hindurchführende Öffnungen, insbesondere von Leitungsdurchgängen, mit einem Kern (14) aus einem Füllmaterial und einem Rahmen (12), wobei der Rahmen (12) den Kern (14) zumindest abschnittsweise in einer Umfangsrichtung (U) umgibt und fest mit dem Kern (14) verbunden ist, wobei der Rahmen (12) aus einem intumeszierendem Material (26) gebildet ist und mindestens ein Verstärkungselement (28) aufweist, wobei das Füllmaterial ein Weichschaum ist, **dadurch gekennzeichnet, dass** das Verstärkungselement (28) in Umfangsrichtung (U) in der äußeren Oberfläche (30) des Rahmens (12) angeordnet ist.

2. Brandschutzelement nach Anspruch 1, **dadurch gekennzeichnet, dass** das Füllmaterial im Wesentlichen keine Brandschutzadditive aufweist.

3. Brandschutzelement nach einem der vorhergehenden Ansprüche, **dadurch gekennzeichnet, dass** das intumeszierende Material (26) ein Hartschaum, insbesondere mit einer Dichte von 100 kg/m³ bis 600 kg/m³, bevorzugt mit einer Dichte von 200 kg/m³ bis 500 kg/m³ ist.

4. Brandschutzelement nach einem der vorhergehenden Ansprüche, **dadurch gekennzeichnet, dass** der Rahmen (12) ein Intumeszenzvolumen aufweist, das dafür vorgesehen ist, im Brandfall den durch den Rahmen (12) gebildeten Querschnitt zu verschließen.

5. Brandschutzelement nach einem der vorhergehenden Ansprüche, **dadurch gekennzeichnet, dass** das Verstärkungselement (28) durch eine Platte, Matte, ein Gitter oder ein Gewebe gebildet ist und vorzugsweise aus Metall, Streckmetall, Glasfasern, Basaltfasern, Kohlenstofffasern oder Keramikfasern besteht.

6. Brandschutzelement nach einem der vorhergehenden Ansprüche, **dadurch gekennzeichnet, dass** zwei entgegengesetzte Seiten (16, 17) des Kerns (14) im Wesentlichen nicht von dem Rahmen (12) bedeckt sind.

7. Brandschutzelement nach einem der vorhergehenden Ansprüche, **dadurch gekennzeichnet, dass** der Rahmen (12) eine Stoßkante (24) aufweist, die durch ein erstes und ein gegenüberliegendes zweites Ende (22, 23) des Rahmens (12) gebildet ist.

8. Brandschutzelement nach einem der vorhergehenden Ansprüche, **dadurch gekennzeichnet, dass** das Brandschutzelement (10) im Wesentlichen quaderförmig ist und insbesondere einen im Wesentlichen quaderförmigen Kern (14) aufweist.

## Claims

1. Fire retardant element (10) for separating openings passing through walls or ceilings, in particular line passages, comprising a core (14), made of a filling material, and a frame (12), wherein the frame (12) surrounds the core (14) at least in sections in a peripheral direction (U) and is fixedly connected to the core (14), wherein the frame (12) is formed by an intumescent material (26) and has at least one reinforcing element (28), wherein the filling material is a soft foam, **characterized in that** the reinforcing element (28) is arranged in the peripheral direction (U) in the outer surface (30) of the frame (12).

2. Fire retardant element according to claim 1, **characterized in that** the filling material has substantially no fire retardant additives.

3. Fire retardant element according to any of the preceding claims, **characterized in that** the intumescent material (26) is a hard foam, in particular having a density of 100 kg/m³ to 600 kg/m³, preferably having a density of 200 kg/m³ to 500 kg/m³.

4. Fire retardant element according to any of the preceding claims, **characterized in that** the frame (12) has an intumescent volume which is intended, in the event of a fire, for closing the cross section formed by the frame (12).

5. Fire retardant element according to any of the preceding claims, **characterized in that** the reinforcing element (28) is formed by a plate, mat, a mesh or a woven fabric and preferably consists of metal, expanded metal, glass fibers, basalt fibers, carbon fibers, or ceramic fibers.

6. Fire retardant element according to any of the preceding claims, **characterized in that** two opposite sides (16, 17) of the core (14) are substantially not covered by the frame (12).

7. Fire retardant element according to any of the preceding claims, **characterized in that** the frame (12) has an abutting edge (24) which is formed by a first and an opposite second end (22, 23) of the frame (12).

8. Fire retardant element according to any of the preceding claims, **characterized in that** the fire retardant element (10) is substantially cuboid and in particular has a substantially cuboid core (14).

## Revendications

1. Élément de protection contre l'incendie (10) destiné à calfeutrer des ouvertures pratiquées à travers des parois ou des plafonds, en particulier des passages de câbles, comportant un noyau (14) constitué d'un matériau de remplissage et un cadre (12), dans lequel le cadre (12) entoure le noyau (14) au moins dans certaines sections dans une direction circonférentielle (U) et est relié de manière fixe au noyau (14), dans lequel le cadre (12) est formé d'un matériau intumescent (26) et présente au moins un élément de renforcement (28), dans lequel le matériau de remplissage est une mousse souple, **caractérisé en ce que** l'élément de renforcement (28) est disposé dans la direction circonférentielle (U) dans la surface extérieure (30) du cadre (12).

2. Élément de protection contre l'incendie selon la revendication 1, **caractérisé en ce que** le matériau de remplissage ne présente sensiblement aucun additif de protection contre l'incendie.

3. Élément de protection contre l'incendie selon l'une des revendications précédentes, **caractérisé en ce que** le matériau intumescent (26) est une mousse rigide, en particulier d'une densité allant de 100 kg/m³ à 600 kg/m³, de préférence d'une densité allant de 200 kg/m³ à 500 kg/m³.

4. Élément de protection contre l'incendie selon l'une des revendications précédentes, **caractérisé en ce que** le cadre (12) présente un volume d'intumescence qui est prévu pour obstruer la section transversale formée par le cadre (12) en cas d'incendie.

5. Élément de protection contre l'incendie selon l'une des revendications précédentes, **caractérisé en ce que** l'élément de renforcement (28) est formé par une plaque, un tapis, une grille ou un tissu et est de préférence constitué de métal, métal déployé, fibres de verre, fibres de basalte, fibres de carbone ou fibres de céramique.

6. Élément de protection contre l'incendie selon l'une des revendications précédentes, **caractérisé en ce que** deux côtés opposés (16, 17) du noyau (14) ne sont sensiblement pas recouverts par le cadre (12).

7. Élément de protection contre l'incendie selon l'une des revendications précédentes, **caractérisé en ce que** le cadre (12) présente un rebord d'impact (24) qui est formé par une première et une seconde extrémité opposée (22, 23) du cadre (12).

8. Élément de protection contre l'incendie selon l'une des revendications précédentes, **caractérisé en ce que** l'élément de protection contre l'incendie (10) est sensiblement parallélépipédique et présente en particulier un noyau (14) sensiblement parallélépipédique.
